Europäisches Patentamt

European Patent Office

Office européen des brevets

(11) Publication number: **0 241 791**
**A1**

## EUROPEAN PATENT APPLICATION

(21) Application number: 87104621.5

(22) Date of filing: 27.03.87

(51) Int. Cl.⁴: **G 01 P 13/00**

(30) Priority: 27.03.86 IT 1990986

(43) Date of publication of application: 21.10.87
Bulletin 87/43

(84) Designated Contracting States: CH DE ES FR GB IT LI

(71) Applicant: INTERMES S.p.A., Via Cantine, 12,
I-39052 Caldaro (Bolzano) (IT)

(72) Inventor: Chiarotti, Vilmo, Via Pozzata, 85,
I-38050 Villazzano (Trento) (IT)

(74) Representative: Dr. Ing. A. Rachell & C., Viale San
Michele del Carso, 4, I-20144 Milano (IT)

(54) Flowmeter.

(57) A flowmeter is envisaged, in which the actuator consists of a membrane (6), a side of which is connected to the upstream pressure, and the other side to the downstream pressure of a sensitive element (7) placed in the flow of the fluid.

In particular the sensitive element (7) consists of a flexible blade fixed centrally in the flow duct (16), so that the flowmeter operates regardless of the position in which it is mounted.

Applicant:

INTERMES S.p.A.

Via Cantine, 12

39052 CALDARO (Bolzano) Italy

## "FLOWMETER"

The present invention refers to flowmeters, i.e. those instruments used for signalling the presence, or absence, of a flow of fluid in a duct.

The known flowmeters are constructed according to one of the following methods: a microswitch is operated by means of leverages that are moved by a fin immersed in the fluid-filled duct.

Another flowmeter works by the operation of a magnetic switch that feels the movement of a magnet made fast to a shutter.

The first one of these flowmeters is reliable, but not very sensitive and/or causes high load losses. The second type of flowmeter has the disadvantage of having a shutter magnet unit immersed in the fluid; thus it is prone to stick when in the presence of impurities or limestone incrustations. Furthermore both methods have remarkable load losses if the rate of flow is high.

FR-A-641.971 moreover discloses a sensor consisting of a sluice gate which is hinged at one end and is raised by the passing fluid. Two ducts put the two sides of a membrane into contact with the pressures upstream and downstream of the sluice gate. A magnet placed near an armature made fast to the membrane picks up the movements of the membrane. This device can obviously operate in a satisfactory manner only if the rotation axis of the sluice gate is perfectly horizontal.

DE-A- 3.340.358 discloses a means for measuring the flow of gas through a fixed narrowing which causes a sensible drop in pressure.

DE-B 1.152.176 is aimed at attaining a spring operation by means of magnets made fast to the end wall of a bellows that senses the differences in pressures upstream and downstream of a filter. This solution, too, requires a sensible drop in pressure.

The purpose of the present invention is to eliminate the encountered inconveniences in the present flowmeters, i.e. to increase the sensitivity and reliability when operating in dirty or calcareous waters, while at the same time making it possible when mounting the flowmeter to orient it in any way.

Another purpose is that of creating a flowmeter that can be used at any pressure range, for example from 0.2 to 16 bar and beyond.

Finally, a further purpose is that of constructing a flowmeter that has extremely low load-losses at high flow rates.

The above purpose was attained by using as actuator a membrane whose two sides, are subject respectively to the upstream and downstream pressures created by a sensitive element placed in the flow of the fluid, said element being fixed centrally in said pipe.

The invention will now be better explained with the aid of an exemplary embodiment that is illustrated in the enclosed drawings, in which:

Fig. 1 is an axial section, along the line of flow, i.e. a section along the line 1-1 in Fig. 2; in it are visible two positions of the sensitive element;

Fig. 2 is a view of a transverse section along the line 2-2 of Fig. 1;

Figg. 3a and 3b are a front view and a cross section respectively of the proposed sensitive element.

With reference to the drawings, it can be observed that the body of the flowmeter is indicated in its whole with 1. It comprises a duct 16 for the flow and a collar 28. Above body 1 is placed a cap 2 on which is arranged hood 3. The sensitive element is indicated with 7; it is mounted by means of a nut 14, on a pivot 4, fixed on a shank 5 made fast to body 1 of the flowmeter.

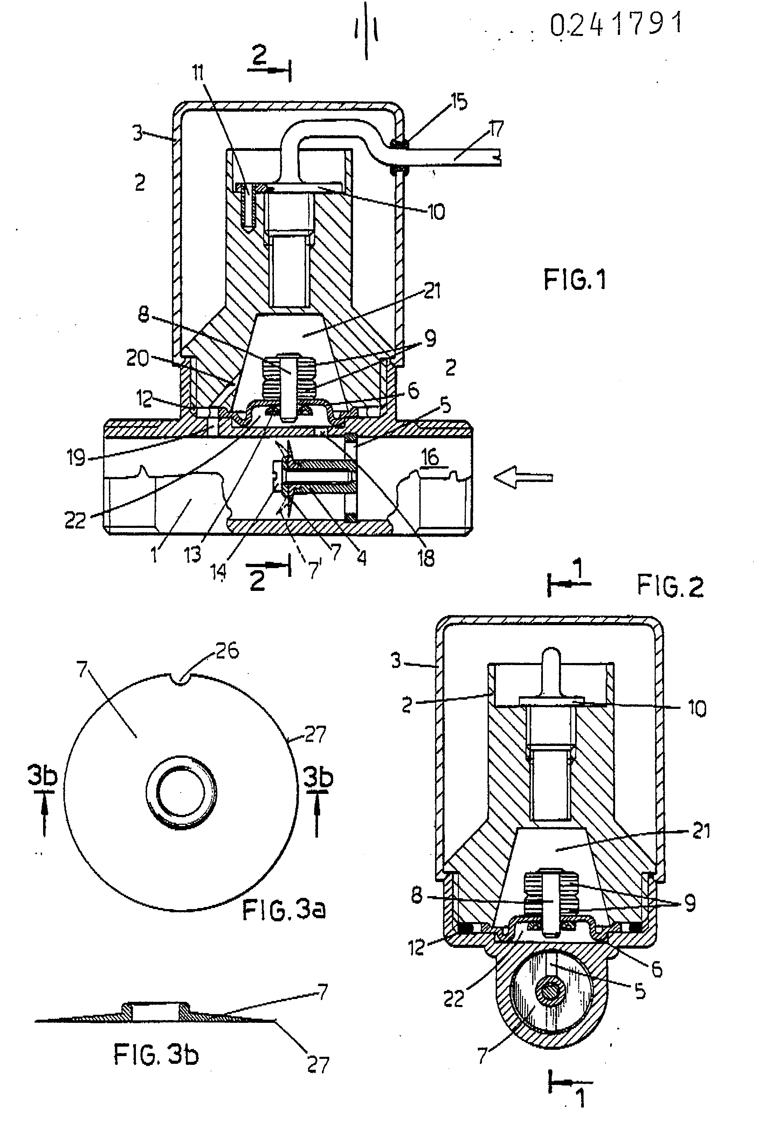

The sensitive element 7 preferably consists of a flexible blade the thickness of which decreases from the centre towards the edge 27 (figs. 3a and 3b). It has also been observed that the sensitivity of the sensitive element increases if at least one small indentation 26 is made in the edge 27 of the blade.

The circumference 27 of sensitive element 7 is accommodated with a slight clearance in flow duct 16. In particular the clearance may be a few tenths of a mm.

Between body 1 and cap 2 is arranged a membrane 6. At the center of membrane 6 is mounted a small plate 13 on which pivot 8 of magnetic element 9 is fixed. The magnetic switch is indicated with 10. It picks up the movement of magnetic element 9. Magnetic switch 10 is equipped with wires 17 that exit from hood 3 after having passed through ring 15. With 11 is indicated the fixing plug of the switch and with 12 an OR grommet.

Membrane 6 defines and hydraulically separates two chambers: the upper one 21 and the lower one 22.

One side of membrane 6, the lower one, defining chamber 22, is connected by means of hole 18, with the upstream area of the sensitive element 7. The other side of membrane 6, the upper one, defining chamber 21, is connected with the downstream area of the

0241791

sensitive element 7 by means of ducts 19 and 20, in body 1 and in cap 2 respectively. Assuming that the entry of the fluid takes place from the right side of Fig. 1, in the direction of the arrow, as soon as the fluid moves the sensitive element warps as indicated by 7'. The pressure upstream of this, via opening 18, is transferred to lower chamber, 22. The downstream pressure of the flexible sensitive element 7 is transmitted to upper chamber 21 of membrane 6. Sensitive element 7 causes a pressure drop between upstream and downstream, so that the upstream pressure is slightly greater than the downstream one.

As a consequence, a greater force is exerted on the lower side of membrane 6. The resulting force causes the lifting of membrane 6 to which is made fast magnetic element 9. This lifting can moreover be minimal since magnetic switch 10 picks up very small movements. When the flow stops, the pressure remains the same both up and downstream of the sensitive element, and in its initial position; the magnetic element then moves away from the switch and we thus have the operation of the electric circuit. Any possible increments or drops in pressure do not influence the operation of the flowmeter, since the latter exploits the difference in pressure and not the total pressure that exists in the duct.

Obviously this flowmeter can be built for use in ducts having any diameter.

INTERMES S.p.A.

39052 CALDARO (Bolzano) Italy

# C L A I M S

1.      Flowmeter comprising a sensitive element and an actuator, subject on both sides respectively to the pressures upstream and downstream of a sensitive element (7) placed in the duct (16) where the fluid flows, characterized in that the sensitive element (7) consists of a flexible blade fixed at its centre.

2.      Flowmeter according to claim 1, characterized in that the thickness of the blade decreases from the centre outwards.

3.      Flowmeter according to any of the preceding claims, characterized in that a small indentation (26) is envisaged in the side of the blade.

4.      Flowmeter according to any of the preceding claims, characterized in that the circumference (27) of the blade is such as to be accommodated in the flow duct (16) with a slight clearance.

5.       Flowmeter according to claim 4, characterized in that the clearance left is a few tenths of a millimetre.

0.241791

FIG.1

FIG.2

FIG.3a

FIG.3b

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A- 641 971 (BRILLIE) * Whole document; figure 1 * | 1 | G 01 P 13/00 |
| A | DE-A-3 340 358 (IL KWANG CO., LTD) * Page 4, lines 1-35; figures 2-7 * | 1 | |
| A | DE-B-1 152 176 (THE KEELAVITE CO. LTD) * Column 1, line 46 - column 2, line 48; figures * | 1 | |
| A | EP-A-0 059 663 (TROUVAY & CAUVIN) * Page 4, lines 25-28; figure 3 * | 3 | |

TECHNICAL FIELDS SEARCHED (Int. Cl.4)

G 01 P
G 01 F
H 01 H

The present search report has been drawn up for all claims

| Place of search | Date of completion of the search | Examiner |
|---|---|---|
| THE HAGUE | 24-07-1987 | HANSEN P. |

EPO Form 1503 03 82

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document